# EUROPÄISCHE PATENTANMELDUNG

(11) **EP 3 611 638 A1**
(43) Veröffentlichungstag der Anmeldung: **19.02.2020**
(21) Anmeldenummer: 18189103.7
(22) Anmeldetag: 15.08.2018
(51) Int. Cl.: G06F 17/50

(54) **VERFAHREN UND SYSTEM ZUR HERSTELLUNG EINES ZUSAMMENGESETZTEN BAUELEMENTS**

(71) Anmelder: SCHÖCK BAUTEILE GmbH, 76534 Baden-Baden (DE)
(72) Erfinder:
(74) Vertreter: Maiwald Patent- und Rechtsanwaltsgesellschaft mbH

(57) **Zusammenfassung**

Es ist ein computergestütztes Verfahren zur Herstellung eines aus mehreren Einzelkomponenten zusammengesetzten Bauelements zum Bau von Gebäuden angegeben, mittels welchem in mehreren Schritten ein baurechtlich zulassbares zusammengesetztes Bauelement erhalten werden kann. Weiterhin ist ein System, mittels welchem Verfahrensschritte des vorgenannten Verfahrens ausgeführt werden können, angegeben.

## Beschreibung

### TECHNISCHES GEBIET

Die Erfindung betrifft ein computergestütztes Verfahren zur Herstellung mindestens eines aus mehreren Einzelkomponenten zusammengesetzten Bauelements, ein System zur Herstellung eines aus mehreren Einzelkomponenten zusammengesetzten Bauelements, ein Computerprogrammprodukt und ein computerlesbares Medium.

### HINTERGRUND DER ERFINDUNG

Im Zuge der Planung eines Bauvorhabens kommen zunehmend computergestützte Verfahren zum Einsatz, mittels welcher unter anderem Anforderungen an die für eine spätere Verbauung auf einer Baustelle benötigten Bauelemente ermittelt oder auch festgelegt werden können.

In diesem Zusammenhang sind beispielsweise Programme bekannt, mittels welcher aus einer Reihe von Bauelementen diejenigen ausgewählt werden können, die bestimmte Anforderungen erfüllen. Eine maßgeschneiderte Herstellung eines Bauelements zugeschnitten auf ein bestimmtes baustellenspezifisches Anforderungsprofil ist derzeit jedoch noch nicht standardmäßig vorgesehen.

### ZUSAMMENFASSUNG DER ERFINDUNG

Die Aufgabe der vorliegenden Erfindung kann darin gesehen werden, Mittel zur Bereitstellung eines aus mehreren Einzelkomponenten zusammengesetzten Bauelements zur Verfügung zu stellen, mittels welcher ein spezifischen Anforderungen genügendes Bauelement produziert werden kann, wodurch sowohl die Planungszeit optimiert als auch die Sicherheit während und nach Abschluss der Bauphase erhöht werden kann.

Die Aufgabe wird durch die Gegenstände der unabhängigen Patenansprüche gelöst. Weiterbildungen und Ausführungsformen sind in den Unteransprüchen und der nachfolgenden Beschreibung enthalten.

Die im Folgenden beschriebenen Ausführungsbeispiele betreffen gleichermaßen das computergestützte Verfahren sowie das System. Mit anderen Worten, können Merkmale, die im Folgenden in Bezug auf das computergestützte Verfahren beschrieben werden, ebenso als Merkmale oder Teilaspekte des Systems angesehen werden, und umgekehrt.

Gemäß einem Aspekt der Erfindung ist ein computergestütztes Verfahren zur Herstellung mindestens eines aus mehreren Einzelkomponenten zusammengesetzten Bauelements angegeben. Dabei weist das Verfahren die im Folgenden beschriebenen Schritte auf: In einem ersten Schritt wird eine Vielzahl von Standarddaten, welche sich auf Eigenschaften baurechtlich zugelassener Standard-Bauelemente beziehen, empfangen und gespeichert. Bei einem Standard-Bauelement handelt es sich um ein standardmäßig bzw. serienmäßig, beispielsweise, aber nicht notwendig in großem Stil, hergestelltes Bauelement. Dabei kann es sich bei einem solchen Bauelement z.B. um ein tragendes Wärmedämmelement handeln. Die zu den Standard-Bauelementen empfangenen und gespeicherten Standarddaten beziehen sich dabei auf mindestens eine der Eigenschaften geometrische Abmessungen, Wärmedämmung, Durchbiegung, Dichtigkeit, Anzahl von Zugstäben, Anzahl von Druckstäben, Anzahl von Drucklagern, Anzahl von Querkraftstäben, Anzahl von Druck-Querkraftkombinationen, Anzahl von Zug -Querkraftkombinationen, Zugfestigkeit und/oder Druckfestigkeit. Dabei können die Standarddaten z.B. auf einem externen Server oder in einer Cloud hinterlegt sein, und im Rahmen des computergestützten Verfahrens entsprechend an z.B. einen weiteren Server übermittelt und auf diesem für weitere Verfahrensschritte gespeichert werden.

In einem folgenden Verfahrensschritt wird eine Vielzahl von Konstruktionsregeln empfangen und gespeichert. Die Konstruktionsregeln beziehen sich auf eine Konstruktion reduzierter Bauelemente ausgehend von den baurechtlich zugelassenen Standard-Bauelementen. Mit anderen Worten sind mit den Konstruktionsregeln Regeln vorgegeben bzw. werden durch die Konstruktionsregeln Schritte angegeben, mittels welcher beginnend mit einem baurechtlich zugelassenen Standard-Bauelement ein weiteres Bauelement erhalten werden kann, wobei sich letzteres in Bezug auf Geometrien und/oder Materialien von dem Standard-Bauelement unterscheidet. Dabei bleibt durch die Anwendung der Konstruktionsregeln die baurechtliche Zulassung der ausgehend von einem Standard-Bauelement konstruierbaren Bauelemente erhalten. Die derart konstruierbaren Bauelemente sind reduziert in dem Sinne, dass durch die Konstruktionsregeln eine Variation und/oder eine Reduktion von Geometrien und/oder Materialien ausgehend von einem der Standard-Bauelemente durchgeführt werden kann. Beispielsweise kann ein Standard-Bauelement sechs Zugstäbe aufweisen. Durch Anwendung entsprechender Konstruktionsregeln kann ausgehend von vorgenanntem Bauelement beispielsweise ein reduziertes Bauelement mit nur fünf, vier oder auch lediglich drei Zugstäben erhalten werden. Dabei sind die Konstruktionsregeln derart geartet, dass durch ihre Anwendung die baurechtliche Zulassung des Ausgangselements, also des baurechtlich zugelassenen Standard-Bauelements, nicht verändert wird. Dies ist insbesondere vorteilhaft, da ein mittels der Konstruktionsregeln erhaltenes reduziertes Bauelement keiner erneuten - häufig zeitlich aufwendigen - baurechtlichen Zulassung mehr bedarf, sondern per Konstruktion diese bereits besitzt.

In einem weiteren Verfahrensschritt werden - beispielsweise durch einen Nutzer - Anforderungsdaten an die Einzelkomponenten eines zusammengesetzten Bauelements eigegeben. Dies kann beispielsweise über eine Eingabeeinheit, z.B. einen Computer mit Bildschirm und Tastatur, geschehen. Anschließend wird basierend auf den eingegebenen Anforderungsdaten, welche ein Anforderungsprofil an ein aus mehreren Einzelkomponenten aufgebautes Bauelement widergeben, ein virtuelles Soll-Bauelement aus den entsprechenden Einzelkomponenten erzeugt. Die Anforderungsdaten beziehen sich dabei zumindest auf eine der folgenden Eigenschaften geometrische Abmessungen, Tragfestigkeit oder Dämmeigenschaften des zusammengesetzten Bauelements. Die Dämmeigenschaften können sich z.B. auf Wärme- und/oder Lärmdämmung beziehen. Ein folgender Verfahrensschritt bezieht sich auf das Erzeugen von virtuellen reduzierten Bauelementen gemäß den oben angesprochenen Konstruktionsregeln aus Standard-Bauelementen. Schließlich wird in einem weiteren Schritt ein Vergleich der Eigenschaften des Soll-Bauelements und der erzeugten reduzierten Bauelemente durchgeführt, mit dem Ziel, mögliche Abweichungen festzustellen. Insbesondere kann durch den Vergleich in diesem Schritt dasjenige reduzierte Bauelement mit den geringsten Abweichungen gegenüber dem Soll-Bauelement identifiziert werden. Während das Soll-Bauelement unter Umständen nicht sofort baurechtlich zugelassen werden kann, bzw. das Soll-Bauelement zunächst einer weiteren Prüfung hinsichtlich seiner baurechtlichen Zulassung unterzogen werden müsste, ist dies im Fall der reduzierten Bauelemente aufgrund der besonderen Natur der vorgenannten Konstruktionsregeln nicht erforderlich.

Bei den im Rahmen der Erfindung diskutierten Bauelementen kann es sich beispielsweise um Dämmelemente, Schalldämmelemente, Bewehrungselemente, oder Abschalelemente handeln.

In anderen Worten ist ein computergestütztes Verfahren angegeben, das es erlaubt, ausgehend von Standarddaten zu Standard-Bauelementen virtuelle reduzierte Bauelemente zu generieren, sowie durch Eingabe eines Anforderungsprofils bzw. Anforderungsdaten ein Soll-Bauelement. Die Eigenschaften des beispielsweise spezifischen Kundenwünschen genügenden Soll-Bauelements können mit entsprechenden Eigenschaften der generierten reduzierten Bauelemente verglichen werden. Im Rahmen der Erzeugung der reduzierten Bauelemente garantieren spezielle Konstruktionsregeln, dass die baurechtliche Zulassung der reduzierten Bauelemente erhalten bleibt. Beispielsweise können die Eigenschaften eines reduziertes Bauelements mit denjenigen des Soll-Bauelements übereinstimmen - ggf. innerhalb bestimmter Toleranzgrenzen -, so dass für das Soll-Bauelement keine gesonderte baurechtliche Prüfung und Zulassung mehr notwendig ist.

Die im Rahmen des Verfahrens empfangenen und gespeicherten Daten können auf einem Computer, einem Server oder in einer Cloud hinterlegt werden. Das Erzeugen von Daten im Rahmen des Verfahrens kann durch eine Erzeugungseinheit eines Computers durchgeführt werden.

Gemäß einem Ausführungsbeispiel der Erfindung ist als ein den vorgenannten Schritten folgender Schritt das Anzeigen von möglicherweise vorhandenen Abweichungen zwischen Eigenschaften des Soll-Bauelements und Eigenschaften der reduzierten Bauelemente vorgesehen, wobei des z.B. auf einem Bildschirm geschehen kann. In einem weiteren Schritt kann beispielsweise einem Nutzer die Möglichkeit gegeben werden, eine Gewichtung der Abweichungen vorzunehmen, beispielsweise nach deren Relevanz für das konkrete Bauprojekt. Es kann allerdings auf vorgesehen sein, dass eine Gewichtung der Abweichungen im letztgenannten Schritt automatisiert nach einer vordefinierten Hierarchiestruktur vorgenommen wird. Auch ist es möglich, dass ein Nutzer zunächst eine Hierarchiestruktur definiert bzw. definieren kann, und eine automatische Gewichtung der festgestellten Abweichungen auf Basis dieser Hierarchiestruktur durchgeführt wird. Dabei kann die Hierarchiestruktur in Form einer Liste und/oder eines Entscheidungsbaums eingegeben werden oder auch bereits hinterlegt/gespeichert sein.

In einem weiteren Ausführungsbeispiel ist vorgesehen, dass bei der vorgenannten Gewichtung der Abweichungen durch einen Nutzer eine graduelle Priorisierung unterschiedlicher Gewichte durchgeführt werden kann. Damit kann es einem Nutzer ermöglicht werden, Prioritäten zu setzen, wenn beispielsweise Abweichungen bei den Dämmeigenschaften unerwünscht, Abweichungen bei geometrischen Abmessungen tolerierbar sind. Dies kann beispielsweise bedeuten, dass ein reduziertes Bauelement, welches sich hinsichtlich der Dämmeigenschaften mit denjenigen des Soll-Bauelements deckt, jedoch kleiner Ausmaße als letzteres aufweist, anstelle des Soll-Bauelements in einem spezifischen Bauprojekt zum Einsatz kommen kann. Die kleinere Dimensionierung kann dann z.B. durch Einsatz einer größeren Anzahl von Bauelementen ausgeglichen werden.

In einem weiteren Ausführungsbeispiel ist der weitere Schritt vorgesehen, dass ausgehend von dem Soll-Bauelement eine Variation der Materialauswahl der Einzelkomponenten des zusammengesetzten Bauelements durchgeführt wird, wobei durch die jeweilige Materialauswahl die Anforderungsdaten erfüllt bleiben. Die somit erzeugten Bauelemente können wiederum mit den reduzierten Bauelementen hinsichtlich ihrer Eigenschaften verglichen werden. Damit wird eine größere Vergleichsmenge geschaffen.

In einem weiteren Ausführungsbeispiel ist der weitere Schritt vorgesehen, dass Produktionsanweisungen zur schrittweisen Herstellung des zusammengesetzten Bauelements als ein reduziertes Bauelement generiert und anschließend ausgegeben werden. Dies soll dann der Fall sein, wenn im Rahmen des Eigenschaftenvergleichs das Soll-Bauelement bzw. aus diesen durch Variation der Materialien erhaltene Bauelemente mit einem reduzierten Bauelement innerhalb vorgebbarer Toleranzgrenzen übereinstimmen.

In einem weiteren Ausführungsbeispiel ist vorgesehen, dass ein zusammengesetztes Bauelement gemäß der vorgenannten Produktionsanweisungen hergestellt wird. Damit wird ein auf das Anforderungsprofil eines Kunden bzw. einer spezifischen Baustelle zugeschnittenes Bauelement hergestellt, das hochspezifische, für die Bauumgebung unter Umständen besonders günstige Eigenschaften aufweisen kann und keiner baurechtlichen Zulassung mehr bedarf. Vielmehr besitzt das letztgenannte Bauelement diese Zulassung bereits.

Gemäß einem zweiten Aspekt der Erfindung ist ein System zur Herstellung mindestens eines aus mehreren Einzelkomponenten zusammengesetzten Bauelements nach einem vorstehend beschriebenen Verfahren angegeben. Dabei weist das System zumindest eine Empfangseinheit, eine Speichereinheit, eine Eingabeeinheit, eine Erzeugungseinheit sowie eine Vergleichseinheit auf. Die Empfangseinheit ist dazu eingerichtet, die Vielzahl von Standarddaten, welche sich auf Eigenschaften von baurechtlich zugelassenen Standard-Bauelementen beziehen, zu empfangen. Weiterhin können durch die Empfangseinheit die Konstruktionsregeln, welche zur Konstruktion der Vielzahl von virtuellen reduzierten Bauelementen ausgehend von den Standard-Bauelementen benötigt werden, empfangen werden. Die Speichereinheit ist dazu eingerichtet, die vorgenannten Standarddaten und die vorgenannten Konstruktionsregeln zu speichern. Dabei kann es sich bei der Speichereinheit beispielsweise um einen Speicher auf einem Server oder einen lokalen Speicher handeln. Auch können die Standartdaten und Konstruktionsregeln in einer Cloud hinterlegt werden. Die Eingabeeinheit ermöglicht unter anderem die Eingabe der Anforderungsdaten an die Einzelkomponenten eines zusammengesetzten Bauelements durch einen Nutzer. Dazu kann die Eingabeeinheit z.B. als Tastatur in Kombination mit einem Bildschirm oder als Touch-Screen ausgeführt sein. Vorgenannte Eingabeeinheit kann weiterhin dazu eingerichtet sein, die eingegebenen Anforderungsdaten an die Erzeugungseinheit zu übermitteln. Mittels letzterer kann aus den Anforderungsdaten ein virtuelles Soll-Bauelement erzeugt werden. Weiterhin ist die Erzeugungseinheit dazu eingerichtet, mittels der Konstruktionsregeln aus den baurechtlich zugelassenen Standard-Bauelementen virtuelle reduzierte Bauelemente zu erzeugen. Schließlich ist die Vergleichseinheit dazu eingerichtet, einen Vergleich der Eigenschaften des Soll-Bauelements und der reduzierten Bauelemente durchzuführen. In Rahmen bzw. als Ziel des Vergleichs werden etwaige Abweichungen der entsprechenden Eigenschaften ermittelt. Insbesondere kann auf diesem Wege dasjenige reduzierte Bauelement ausfindig gemacht werden, welches den Eigenschaften des Soll-Bauelements am nächsten kommt, oder sogar mit diesen übereinstimmt. Der Vorteil dieses Vorgehens besteht unter anderem insbesondere darin, dass die virtuellen reduzierten Bauelemente per Konstruktion baurechtlich zugelassen sind. Stimmen die Eigenschaften eines reduzierten Bauelements mit denen des Soll-Bauelements überein, oder kann aufgrund lediglich geringfügiger Abweichungen das betreffende reduzierte Bauelement anstelle des Soll-Bauelements im Rahmen des Bauvorhabens verwendet werden, so ist keine aufwändige baurechtliche Zulassung mehr notwendig. Dabei spiegelt bzw. gibt das Soll-Bauelement gerade die durch z.B. den Bauherrn oder das Bauunternehmen gesetzten Anforderungen wider.

Es kann beispielsweise vorgesehen sein, dass das System durch einen oder mehrere Nutzer bedient werden kann, welche beispielsweise durch die Eingabe von Befehlen über eine Tastatur oder einen Bildschirm oder durch sprachliche Anweisungen das System veranlassen, unter anderem die virtuellen reduzierten Bauelemente zu erzeugen und einen Vergleich mit einem Soll-Bauelement durchzuführen.

Auf dem vorstehend und im folgenden beschriebenen Weg können demnach für ein Bauvorhaben hochspezialisierte, auf spezifische Anforderungen in der Einbauumgebung zugeschnittene Bauelemente entworfen und zur Produktion gebracht werden, welche keiner baurechtlichen Zulassung mehr bedürfen, sondern diese aufgrund des speziellen Planungsverlaufs bereits besitzen.

Gemäß einem weiteren Ausführungsbeispiel sind zumindest die Speichereinheit, die Erzeugungseinheit und die Vergleichseinheit des Systems auf einem zentralen Server angeordnet. Die Eingabeeinheit kann vorzugsweise auf einem mobilen Endgerät, welches als Client ausgeführt sein kann, angeordnet sein.

Gemäß einem dritten Aspekt der Erfindung ist ein Computerprogrammprodukt angegeben, welches Befehle umfasst, welche bei der Ausführung durch einen Prozessor eines Computers letzteren veranlassen, ein Verfahren gemäß oben beschriebener Verfahrensschritte auszuführen. Vorzugsweise ist das Computerprogrammprodukt auf einer Vergleichseinheit oder einer Erzeugungseinheit eines vorstehend beschriebenen Systems ausführbar.

Gemäß einem vierten Aspekt der Erfindung ist ein computerlesbares Medium angegeben, auf dem das vorgenannte Computerprogrammprodukt abgespeichert ist.

### KURZE BESCHREIBUNG DER FIGUREN

Fig. 1 zeigt eine schematische Darstellung eines computergestützten Verfahrens gemäß einem Ausführungsbeispiel der Erfindung.
Fig. 2 zeigt eine schematische Darstellung eines Systems gemäß einem Ausführungsbeispiel der Erfindung.

Die Darstellungen der Figuren sind schematisch und nicht maßstäblich. Die Verwendung von Bezugszeichen in den Ansprüchen ist als nicht einschränkend anzusehen.

### DETAILLIERTE BESCHREIBUNG VON AUSFÜHRUNGSBEISPIELEN

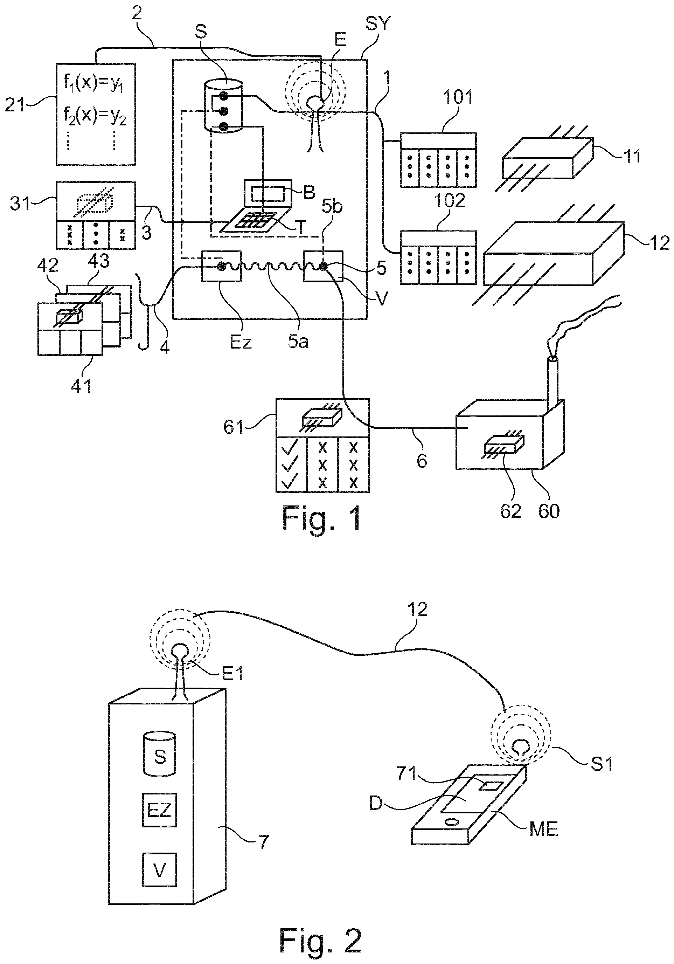

Fig. 1 zeigt eine schematische Darstellung eines computergestützten Verfahrens sowie eine System SY gemäß einem Ausführungsbeispiel. Das System SY umfasst dabei eine Empfangseinheit E, eine Speichereinheit S, eine Erzeugungseinheit EZ, eine Vergleichseinheit V, sowie eine Eingabeeinheit, die im dargestellten, beispielhaften Fall der Fig. 1 als Kombination aus Tatstatur T und Bildschirm B ausgeführt ist. Auch wenn der Übersichtlichkeit halber nicht explizit in der Fig. 1 gezeigt so können die Erzeugungseinheit EZ, die Vergleichseinheit V, die Speichereinheit S und/oder die Empfangseinheit E jeweils mit Bildschirm B verbunden sein, auf dem ein Nutzer des Systems SY zu entsprechender Zeit mittels der Tastatur T Befehle eingeben kann, oder auf dem einem Nutzer z.B. Ergebnisse eines Vergleichs von Soll- und reduzierten Bauelementen, oder auch ein Prozessstatus angezeigt werden können.

In einem ersten, in Fig. 1 dargestellten Verfahrensschritt 1 werden durch die Empfangseinheit E Standarddaten 101 eines Standard-Bauelements 11, sowie Standarddaten 102 eines Standardbauelements 12 empfangen, an die Speichereinheit S weitergeleitet, und dort gespeichert. Dabei handelt es sich bei den Standardbauelementen 11 und 12 um baurechtlich zugelassene, z.B. serienmäßig hergestellte Bauelemente zum Verbau auf einer Baustelle. Es kann sich dabei z.B. um tragende Dämmelemente mit einer bestimmten Anzahl von Zug- bzw. Druckstäben handeln. Damit werden offenbar insbesondere aus mehreren Einzelkomponenten zusammengesetzte Bauelemente betrachtet, im beispielhaften Fall der Fig. 1 tragende Dämmelemente mit z.B. einer unterschiedlichen Anzahl von Zug- bzw. Druckstäben. Die übermittelten Standarddaten können sich auf mindestens eine der Eigenschaften geometrische Abmessungen, Wärmedämmung, Durchbiegung, Dichtigkeit, Anzahl von Zugstäben, Anzahl von Druckstäben, Zugfestigkeit und/oder Druckfestigkeit beziehen. In einem weiteren Verfahrensschritt 2 werden durch die Empfangseinheit E Konstruktionsregeln 21 empfangen, ebenfalls an die Speichereinheit weitergeleitet, und dort gespeichert. Dabei handelt es sich bei den Konstruktionsregeln um Regeln mittels derer ausgehend von baurechtlich zugelassenen Standard-Bauelementen, also z.B. den Elementen 11 und 12, - zunächst virtuelle - reduzierte Bauelemente erzeugt werden können, welche ebenfalls baurechtlich zugelassen sind. D.h., eine baurechtliche Zulassung muss für entsprechend erzeugte reduzierte Bauelemente nicht mehr durchgeführt werden, sondern die reduzierten Bauelemente sind per Konstruktion bereits baurechtlich zugelassen. Die Konstruktionsregeln 21 beinhalten dabei Regeln zur Variation und/oder Reduktion von Geometrien und Materialien der Standard-Bauelemente.

In einem folgenden Verfahrensschritt 3 werden beispielsweise durch einen Nutzer - den Bauherrn, Polier oder Architekten - Eigenschaften eines Soll-Bausteins in Form von Anforderungsdaten 31 über Tatstatur T und Bildschirm B eingegeben. Die eingegebenen Daten können beispielswiese ebenfalls in der Speichereinheit S hinterlegt werden. Die Anforderungsdaten 31 können sich dabei mindestens auf eine der Eigenschaften geometrische Abmessungen, Tragfestigkeit, oder Dämmeigenschaften des mindestens einen Soll-Bauelements beziehen. Mittels der Anforderungsdaten kann z.B. der Bauherr bzw. ein anderer Nutzer, ein bestimmtes, individuelles und damit auf einen bestimmten Einbauort an einer bestimmten Baustelle bezogenes Anforderungsprofil an ein Bauelement eingeben. Dieses Anforderungsprofil kann Eigenschaften des Soll-Bauelements erfordern, welche sich nicht mit den bekannten und z.B. serienmäßig hergestellten Standard-Bauelementen decken. Z.B. kann in einer Bauumgebung der Platz für einen Balkon deutlich geringer ausfallen, als es standardmäßig der Fall ist, und ein standardmäßiges tragendes Dämmelement wäre an dieser Stelle zu groß und könnte nicht verbaut werden. Es können auch spezielle Eigenschaften hinsichtlich der Dämmeigenschaften in einer sehr lauten oder sehr feuchten Umgebung erforderlich sein gefordert werden, welche nicht durch Standard-Bauelemente abgedeckt werden.

In einem folgenden Verfahrensschritt 4 werden durch die Erzeugungseinheit EZ unter Nutzung der Konstruktionsregeln 21 und der Standarddaten 101, 102 zu Standard-Bauelementen 11, 12 in Form von korrespondierenden Daten 41, 42, 43 die Eigenschaften virtueller, reduzierter Bauelemente ermittelt. Die Eigenschaften der reduzierten Bauelemente sind dabei so geartet, dass bei einer Herstellung eines reduzierten Bauelements keine aufwendige baurechtliche Zulassung mehr erfolgen muss, sondern aufgrund der Erhaltung der Eigenschaft der baurechtlichen Zulassung im Rahmen der Erzeugung der reduzierten Bauelemente diese direkt gegeben ist.

Im weiteren Verfahrensschritt 5, werden die Eigenschaften des Soll-Bauelements mit denjenigen der erzeugten virtuellen reduzierten Bauelemente, d.h. den korrespondierenden Daten 41, 42, 43 verglichen. Dazu werden zunächst in Unterschritt 5a die auf die reduzierten Bauelemente bezogenen Daten durch die Erzeugungseinheit EZ an die Vergleichseinheit V übermittelt. In Unterschritt 5b erfolgt die Übermittlung der auf das Soll-Bauelement bezogenen Anforderungsdaten 31. Auf diese Unterschritte 5a und 5b folgend, kann durch die Vergleichseinheit V im Schritt 5 ein Vergleich der entsprechenden Daten durchgeführt werden. Ziel des Vergleichs ist es, dasjenige reduzierte Bauelement zu ermitteln, dessen Eigenschaften denjenigen des Soll-Bauelements am nächsten kommen, oder sogar mit diesen übereinstimmen.

Im Anschluss oder nach Durchführung weiterer Schritte können in dem in Fig. 1 dargestellten Verfahrensschritt 6 Produktionsdaten 61 für ein zusammengesetztes Bauelement 62 ausgegeben werden, welche in einem Produktionsbetrieb 60 zur Herstellung des physischen zusammengesetzten Bauelements verwendet werden. Dabei kann es sich bei den Produktionsdaten 61 um Daten handeln, die sich auf dasjenige reduzierte Bauelement beziehen, welches in seinen Eigenschaften denjenigen des Soll-Bauelements am nächsten kommt, oder dessen Eigenschaften sich mit ihnen decken.

Zwischen den in Fig. 1 dargestellten Verfahrensschritten 5 und 6 kann einem Nutzer beispielsweise auf dem Bildschirm B angezeigt werden, welche Abweichungen in den Eigenschaften der reduzierten Bauelemente 41, 42 und 43 jeweils von den Eigenschaften des Soll-Bauelements existieren. Der Nutzer kann in einem Zwischenschritt die Möglichkeit haben, mittels der Tastatur oder einer anderen Eingabeeinheit eine Auswahl und Gewichtung zu treffen, welche zu einer Auswahl eines reduzierten Bauelements als beim Bau zu verwendendes führen kann.

Fig. 2 zeigt ein System gemäß einem Ausführungsbeispiel. In diesem Beispiel sind die Speichereinheit S, die Erzeugungseinheit EZ und die Vergleichseinheit V auf einem zentralen Server 7 angeordnet. Der Server 7 weist eine Empfangseinheit E1 auf. Ein Nutzer des Systems hat die Möglichkeit, über die Eingabeeinheit 71 auf dem Display D eines mobilen Endgeräts ME z.B. die Anforderungsdaten einzugeben. Über den Sender S1 des mobilen Endgeräts ME können die Anforderungsdaten an die Empfangseinheit E1 des Servers 7 übertragen werden, angezeigt durch die Funkverbindung 72. Die Datenübertragung kann beispielsweise auch drahtgebunden stattfinden. Das mobile Endgerät ME ist als Client ausgeführt. Dem Nutzer des mobilen Endgeräts ME können auf dem Display D beispielswiese auch ein Prozessfortschritt, Ergebnisse des Vergleichs von reduzierten und Soll-Bauelementen oder Gewichtungsmöglichkeiten für eine Auswahl eines reduzierten Bauelements angezeigt werden. Dazu kann beispielsweise die Funktion von Sendeeinheit S1 und Empfängereinheit E1 umgekehrt werden, so dass entsprechende Daten vom Server an das mobile Endgerät übermittelt werden können.

Es sei angemerkt, dass anstelle eines mobilen Endgeräts ME auch z.B. ein fester Arbeitsplatz-Rechner mit einem Bildschirm und einer Tatstatur die Eingabeeinheit 71 aufweisen kann.

Ergänzend sei daraufhingewiesen, dass "aufweisend" keine anderen Elemente oder Schritte ausschließt und "ein" oder "eine" keine Vielzahl ausschließt. Ferner sei daraufhingewiesen, dass die Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Insbesondere sind Bezugszeichen in den Ansprüchen nicht als Einschränkung anzusehen.

## Patentansprüche

1. **Computergestütztes Verfahren** zur Herstellung mindestens eines aus mehreren Einzelkomponenten zusammengesetzten Bauelements zum Bau von Gebäuden, das Verfahren aufweisend die Schritte:
- Empfangen und Speichern von einer Vielzahl von **Standarddaten** baurechtlich zugelassener **Standard-Bauelemente,**
wobei die Standarddaten sich auf mindestens eine der Eigenschaften geometrische Abmessungen, Wärmedämmung, Durchbiegung, Dichtigkeit, Anzahl von Zugstäben, Anzahl von Druckstäben, Zugfestigkeit und/oder Druckfestigkeit beziehen,
- Empfangen und Speichern einer Vielzahl von **Konstruktionsregeln** zur Konstruktion **reduzierter Bauelemente** ausgehend von den baurechtlich zugelassenen Standard-Bauelementen,
wobei durch die Anwendung der Konstruktionsregeln die baurechtliche Zulassung der konstruierbaren reduzierten Bauelemente erhalten bleibt,
wobei die Konstruktionsregeln eine Variation und/oder Reduktion von Geometrien und Materialien beinhalten,
- Eingabe von **Anforderungsdaten** an die Einzelkomponenten eines zusammengesetzten Bauelements und Erzeugen eines virtuellen **Soll-Bauelements** aus den Einzelkomponenten gemäß den Anforderungsdaten,
wobei die Anforderungsdaten zumindest geometrische Abmessungen, Tragfestigkeit, oder Dämmeigenschaften des mindestens einen Bauelements umfassen,
- Erzeugen von virtuellen **reduzierten Bauelementen** gemäß den Konstruktionsregeln aus Standard-Bauelementen,
- **Vergleich** der Eigenschaften des Soll-Bauelements mit den Eigenschaften der reduzierten Bauelemente, um mögliche Abweichungen festzustellen.

2. Verfahren nach Anspruch 1, weiterhin aufweisend die Schritte:
- Anzeigen von Abweichungen zwischen Eigenschaften des Soll-Bauelements und Eigenschaften der reduzierten Bauelemente,
- **Gewichtung** der Abweichungen nach einer definierbaren oder vordefinierten Hierarchiestruktur,
wobei die Hierarchiestruktur in Form einer Liste und/oder eines Entscheidungsbaums eingegeben wird oder gespeichert ist.

3. Verfahren nach Anspruch 2, wobei bei der Gewichtung der Abweichungen durch einen Nutzer eine graduelle Priorisierung unterschiedlicher Gewichte durchgeführt werden kann.

4. Verfahren nach einem der vorherigen Ansprüche, weiterhin aufweisend den Schritt:
- Variation der Materialauswahl der Einzelkomponenten des zusammengesetzten Bauelements, wobei durch die jeweilige Materialauswahl die Anforderungsdaten erfüllt bleiben.

5. Verfahren nach einem der vorherigen Ansprüche, aufweisend die Schritte:
- Ausgabe von **Produktionsanweisungen** zur schrittweisen Herstellung des zusammengesetzten Bauelements als ein reduziertes Bauelement, falls das Soll-Bauelements mit einem reduzierten Bauelement innerhalb vorgebbarer Toleranzgrenzen übereinstimmt.

6. Verfahren nach Anspruch 5, weiterhin aufweisend den Schritt:
- **Herstellung** des Bauelements nach den Produktionsanweisungen.

7. **System** zur Herstellung mindestens eines aus mehreren Einzelkomponenten zusammengesetzten Bauelements nach einem Verfahren der vorherstehenden Ansprüche, das System aufweisend:
- eine Empfangseinheit,
- eine Speichereinheit,
- eine Eingabeeinheit,
- eine Erzeugungseinheit, und
- eine Vergleichseinheit,
wobei die Empfangseinheit dazu eingerichtet ist, einer Vielzahl von Standarddaten der baurechtlich zugelassenen Standard-Bauelemente und
einer Vielzahl von Konstruktionsregeln zur Konstruktion der reduzierten Bauelemente zu empfangen,
wobei die Speichereinheit dazu eingerichtet ist, die Vielzahl von Standarddaten der baurechtlich zugelassenen Standard-Bauelemente und
die Vielzahl von Konstruktionsregeln zur Konstruktion der reduzierten Bauelemente zu speichern,
wobei die Eingabeeinheit dazu eingerichtet ist, die Eingabe von Anforderungsdaten an die Einzelkomponenten eines zusammengesetzten Bauelements durch einen Nutzer zu ermöglichen,
wobei die Erzeugungseinheit dazu eingerichtet ist, eines virtuellen Soll-Bauelement und virtuelle reduzierte Bauelemente zu erzeugen,
wobei die Vergleichseinheit dazu eingerichtet ist, das Soll-Bauelement und die reduzierten Bauelemente miteinander zu vergleichen.

8. System nach Anspruch 7, wobei die Speichereinheit, die Erzeugungseinheit und die Vergleichseinheit auf einem zentralen Server angeordnet sind, und wobei zumindest die Eingabeeinheit vorzugsweise auf einem mobilen Endgerät angeordnet ist, welches als Client ausgeführt ist.

9. Computerprogrammprodukt, welches auf einer Vergleichseinheit eines Systems nach einem der Ansprüche 7 oder 8 ausführbar ist, und welches Befehle umfasst, die bei der Ausführung durch einen Prozessor eines Computers diesen veranlassen, ein Verfahren nach einem der Ansprüche 1 bis 6 auszuführen.

10. Computerlesbares Medium, auf dem das Computerprogrammprodukt nach Anspruch 9 gespeichert ist.
